# EUROPEAN PATENT SPECIFICATION

(11) **EP 4 569 025 B1**
(45) Date of publication and mention of the grant of the patent: **03.12.2025**
(21) Application number: 23769104.3
(22) Date of filing: 06.09.2023
(51) Int. Cl.: C08K 5/544, C08L 43/04, C09D 201/10

(54) **MOISTURE-CURABLE COMPOSITION AND ADHESIVE CONTAINING THE COMPOSITION**
FEUCHTIGKEITSHÄRTENDE ZUSAMMENSETZUNG UND DIE ZUSAMMENSETZUNG ENTHALTENDER KLEBSTOFF
COMPOSITION DURCISSABLE À L'HUMIDITÉ ET ADHÉSIF CONTENANT LA COMPOSITION

(30) Priority: 16.09.2022 JP 2022148560
(43) Date of publication of application: 18.06.2025
(73) Proprietor: Wacker Chemie AG, 81671 München (DE)
(72) Inventor: SUZUKI, Tomoya, Chikusei-shi, Ibaraki 300-4522 (JP); TABATA, Takuya, Chikusei-shi, Ibaraki 300-4522 (JP)
(74) Representative: Mieskes, Klaus Theoderich
(86) International application number: PCT/EP2023/074368
(87) International publication number: WO 2024/056473

(56) References cited:
- JP-A- 2014 208 795
- JP-A- 2019 137 770
- US-A1- 2016 122 606

## Description

### Technical Field

The present invention relates to a moisture-curable composition, and more particularly, to a moisture-curable composition that can be cured at room temperature by moisture in the air or the like to form a cured product that has good rubber properties and can exhibit excellent water-resistant adhesive properties including good tensile adhesion strength even after immersion in water.

### Background Art

It is known that organic polymers having a crosslinkable silyl group are cross-linked by a siloxane bond formed under a hydrolysis reaction of the crosslinkable silyl group due to moisture or the like even at room temperature, to form rubber cured products. Among the polymers, a polyoxyalkylene-based polymer having a crosslinkable silyl group is widely used as an adhesive, a sealing material, or a coating material for building applications, applications involved in the electrical and electronic fields, and applications involved in the automotive field.

By selecting various components, such as a filler and a plasticizer, to blend a curable composition containing a crosslinkable silyl group-containing organic polymer, various physical properties can be adjusted.

For example, Patent Literature 1 discloses that a modified silicone-based resin composition having improved water-resistant adhesive properties is obtained by adding a curable composition containing a polymer (B) having as a molecular chain an alkyl acrylate monomer unit and/or an alkyl methacrylate monomer unit to a polyoxyalkylene-based polymer having a silicon-containing functional group.

The curable composition is cured with a hydrolysis catalyst. As the catalyst, an organotin catalyst such as dibutyltin dilaurate is usually used. However, the organotin catalyst is toxic, and therefore in consideration of environment and personal safety, a moisture-curable composition in which an organotin compound is not used for curing is required. The adhesive properties after immersion of the obtained cured product in water (tensile adhesion strength) are required to be further improved.

Patent Literature 2 discloses that a moisture-curable composition containing a silane-crosslinkable polymer, and at least one reaction product prepared from at least one aminosilane having at least one primary amino group and an alkene having no silane group capable of undergoing 1,4-addition reactions with primary amino groups has excellent water-resistant adhesive properties based on evaluation of cohesive fracture. However, Patent Literature 2 does not refer to tensile adhesion strength after immersion in water, and it is unclear whether sufficient adhesive properties are retained after immersion in water.

Examples of moisture-curable compositions having water-resistant adhesion are disclosed in Patent Literature 3 and in Patent Literature 4. Specifically, they disclose a moisture-curable composition having water-resistant adhesion and containing a (meth)acrylate-based polymer having a reactive silyl group, and a polyoxyalkylene polymer having a reactive silyl group.

For compositions mainly containing a silane-crosslinkable polymer, a composition that exhibits sufficient water-resistant adhesive properties is not known.

### Citation List

### Patent Literature

PTL 1: Japanese Patent Application Laid-Open No. 2003-313419
PTL 2: WO2007/085622 (Japanese Translation of PCT Patent Application Publication No. 2009-524721)
PTL 3 : US 2016/122606 A1
PTL 4 : JP 2019 137770 A

### Summary Of Invention

### Technical Problem

As described above, a moisture-curable composition capable of forming a cured product having excellent water-resistant adhesive properties including good tensile adhesion strength even after immersion in water has not been found. Furthermore, a cured product that exhibits excellent rubber properties including high tensile strength and elongation is required.

It is an object of the present invention to provide a moisture-curable composition in which a metal catalyst is not used in consideration of environment and safety and that forms a cured product having high water-resistant adhesive properties and rubber properties (physical properties including good tensile strength and elongation).

### Solution To Problem

The present inventors have found that the above-mentioned problems can be solved by adding a specific silylated acrylate to a moisture-curable polymer, which preferably includes at least one polyoxyalkylene structural unit and having a crosslinkable silyl group at the terminal, thereby completing the present invention.

Specifically, the present invention is a moisture-curable composition including:
a component (A) which is selected from **α**-silane-terminated polymers having the crosslinkable alkoxysilyl group bonded to an adjacent urethane unit via a methylene spacer and represented by the general formula (1):

   Y-[CH₂-SiR¹ₐ(OR²)₃₋ₐ]ₓ (1)
wherein Y is an x-valent polymer group bonded via said urethane unit to the group -[CH₂-SiR¹ₐ(OR²)₃₋ₐ]ₓ,
R¹ is a monovalent, optionally substituted SiC-bonded hydrocarbon group,
R²(s) may be the same as or different from each other and is a hydrogen atom or a monovalent, optionally substituted hydrocarbon group,
x is an integer of 1 to 10, and
a is 1;
a polymer (B) (component B) containing one type alone of (meth)acrylate monomer unit and such (meth)acrylate monomer is methyl(meth)acrylate and containing a crosslinkable silyl group in the molecule; and
a component (C) that is an amine-based catalyst having at least one alkoxy group.

The above-mentioned moisture-curable composition can be cured without a metal catalyst typified by an organotin catalyst, and exhibit good adhesive properties to a substrate. The moisture-curable composition that contains the components (B) and (C) can exhibit good adhesive properties even after immersion in water.

The present invention is a method including allowing the component (B) to be contained in a moisture-curable composition including the components (A) and (C) described above to make the tensile adhesion strength of a cured product to a substrate after performing a water immersion test, in which they are immersed in water at 23°C for 168 hours, equal to or more than that before performing the water immersion test.

After the substrates are bonded by applying the moisture-curable composition to the substrates and curing the moisture-curable composition, when the cured product is brought into contact with water, the adhesion strength of the cured product to the substrates generally tends to decrease. However, the present invention allows the adhesion strength after contact with water to be maintained or the adhesion strength to be improved.

The moisture-curable composition of the present invention may include at least one liquid component product. The moisture-curable composition may have any aspect or form as long as a cured product of the moisture-curable composition is finally obtained by curing with moisture. The polyoxyalkylene polymer (component (A)) having as a terminal group an alkoxysilane represented by -CH₂-SiR¹ₐ(OR²)₃₋ₐ contained in the moisture-curable composition is hydrolyzed by moisture in the presence of the amine-based catalyst (component (C)) having an alkoxy group to produce a silanol. By a dehydration-condensation reaction of the silanol, a matrix is formed through a siloxane bond, to cure the moisture-curable composition.

The (meth)acrylate polymer (component (B)) having a crosslinkable silyl group in the molecule is incorporated into the matrix due to the crosslinkable silyl group in the component (B), which contributes to an improvement in water-resistant adhesive properties.

Since the component (A) has a crosslinkable silyl group at an α position of a polymer chain, the component (A) is highly reactive, and the moisture-curable composition can be cured by a cross-linking reaction without a metal catalyst typified by an organotin catalyst. Specifically, the cross-linking reaction of the component (A) proceeds in the presence of the amine-based catalyst as the component (C) due to water such as moisture in the air, and the moisture-curable composition is cured. The cured product of the moisture-curable composition containing the component (A) exhibits high rubber properties (high tensile strength and high elongation). When the (meth)acrylate polymer (B) having a crosslinkable silyl group is added, a matrix is formed with the component (A) by a cross-linking reaction. Thus, the tensile strength of the cured product can be improved while the elongation of the cured product is maintained.

By interacting with the substrates, an ester group in the component (B) acts to bond the cured moisture-curable composition to the substrates. Therefore, the matrix containing the component (B) is more strongly bonded to the substrates than the matrix formed by cross-linking only the component (A) is. Even when the cured product is exposed to water (i.e., after immersion in water), a phenomenon of decreasing the tensile adhesion strength due to water entering a space between the substrates and the cured product can be suppressed. Since the component (B) is a polymer having a methyl group in the main chain, the rotation of the main chain is restricted as compared with a case where the polymer does not have a methyl group. Thus, the crystallinity is high. Therefore, entrance of water from outside can be suppressed.

The alkoxy group moiety in the molecule of the component (C) is integrated with the components (A) and (B), so that the component (C) is incorporated into the matrix. Due to an interaction of the amino group moiety with the substrates, the adhesive properties of the cured product with the substrates are further improved.

Since the component (B) has a silyl group, the component (B) has good compatibility with the component (A), and a uniform chemical composition of the moisture-curable composition may be maintained over a long period. Therefore, the moisture-curable composition of the present invention has excellent storage stability.

The moisture-curable composition of the present invention is suitable as an adhesive, a sealing material, or a coating material. In particular, the moisture-curable composition having excellent water-resistant adhesive properties is used as an adhesive or a sealing material for bonding the substrates.

### Description Of Embodiments

Hereinafter, the present invention will be described in detail.

The moisture-curable composition of the present invention includes:
a component (A) which is selected from **α**-silane-terminated polymers having the crosslinkable alkoxysilyl group bonded to an adjacent urethane unit via a methylene spacer and represented by the general formula (1):

   Y-[CH₂-SiR¹ₐ(OR²)₃₋ₐ]ₓ (1)
wherein Y is an x-valent polymer group bonded via said urethane unit to the group - [CH₂-SiR¹ₐ(OR)₃₋ₐ]ₓ, is a monovalent, optionally substituted SiC-bonded hydrocarbon group,
R²(s) may be the same as or different from each other and is a hydrogen atom or a monovalent, optionally substituted hydrocarbon group,
x is an integer of 1 to 10, and
a is 1;
a polymer (B) (component B) containing one type alone of (meth)acrylate monomer unit and such (meth) acrylate monomer is methyl (meth) acrylate and containing a crosslinkable silyl group in the molecule; and
a component (C) that is an amine-based catalyst having at least one alkoxy group.

In the above-mentioned formula (1), Y has a polymer chain which is preferably a polyoxyalkylene, and is a group bonded to a group of -[CH₂-SiR¹ₐ(OR²)₃₋ₐ] with -O-C(=O)-NH- or -NH-C(=O)-O -, R¹ is a monovalent, optionally substituted SiC-bonded hydrocarbon group, R²(s) may be the same as or different from each other and is a hydrogen atom or a monovalent, optionally substituted hydrocarbon group, and a is 1.

The above-mentioned moisture-curable composition may be a composition containing 5 parts by mass or more and 90 parts by mass or less of the component (A), 5 parts by mass or more and 90 parts by mass or less of the component (B), and 0.01 parts by mass or more and 10 parts by mass or less of the component (C), relative to 100 parts by mass of the entire moisture-curable composition.

### Component A:

The silane-modified polymer (A) in the present invention is selected from a silane-terminated polymers having the crosslinkable alkoxysilyl group bonded to an adjacent urethane unit via a methylene spacer and represented by the above-mentioned general formula (1). The group is an alkoxysilyl group bonded to one end of the polymer backbone. The component (A) is preferably a silane-modified polymer including at least one polyoxyalkylene structural unit.

The silane-modified polymer (A), which is a main component of the moisture-curable composition, is capable of forming a cured product by moisture after application.

The silane-modified polymer (A) may be purchased as a commercial product and also may be prepared by commonly used chemical methods. The silane-modified polymer (A) may be used alone or a mixture of two or more types thereof may be used in combination.

The silane-modified polymer (A) is a so-called α-silane-terminated polymer having a crosslinkable alkoxysilyl group bonded to an adjacent urethane unit via a methylene spacer. Since the silane-modified polymer (A) having such a structure achieves a high curing rate when it comes into contact with air, the silane-modified polymer (A) has high safety in terms of not requiring a toxic tin catalyst, and has a low environmental load. Examples of commercially available α-silane terminated polymers include GENIOSIL (registered trademark) STP-E 10 and STP-E 30 available from Wacker Chemie AG.

The group R¹ is a monovalent, optionally substituted SiC-bonded hydrocarbon group.

Examples of the group R¹ include an alkyl group, e.g., a methyl group, an ethyl group, a n-propyl group, an isopropyl group, a n-butyl group, a sec-butyl group, an isobutyl group, a tert-butyl group, a n-pentyl group, an isopentyl group, a neopentyl group, a tert-pentyl group, a hexyl group, e.g., a n-hexyl group, a heptyl group, e.g., a n-heptyl group, an octyl group, e.g., a n-octyl group, an isooctyl group, and a 2,2,4-trimethylpentyl group, a nonyl group, e.g., a n-nonyl group, a decyl group, e.g., a n-decyl group, a dodecyl group, e.g., a n-dodecyl group, and an octadecyl group, e.g., a n-octadecyl group; a cycloalkyl group, e.g., a cyclopentyl group, a cyclohexyl group, a cycloheptyl group, and a methylcyclohexyl group; an alkenyl group, e.g., a vinyl group, a 1-propenyl group, and a 2-propenyl group; an aryl group, e.g., a phenyl group, a naphthyl group, an anthryl group, and a phenanthryl group; an alkaryl group, e.g., o-, m-, and p-tolyl groups, a xylyl group, and an ethylphenyl group; and an aralkyl group, e.g., a benzyl group, α-and β-phenylethyl groups.

Examples of the substituted group R¹ include a haloalkyl group, e.g., a 3,3,3-trifluoro-n-propyl group, a 2,2,2,2',2',2'-hexafluoroisopropyl group, and a heptafluoroisopropyl group; and a haloaryl group, e.g., o-, m-, and p-chlorophenyl groups.

The group R¹ is a monovalent hydrocarbon group which is preferably optionally substituted by a halogen atom and has 1 to 6 carbon atoms, more preferably an alkyl group having 1 or 2 carbon atoms, and more particularly a methyl group.

Examples of the group R² include those specified for the group R¹.

The group R² is preferably a hydrogen atom or an alkyl group which is optionally substituted by a halogen atom and has 1 to 10 carbon atoms, more preferably an alkyl group having 1 to 4 carbon atoms, more particularly a methyl group or an ethyl group.

The polymer group Y includes, as a polymer chain, polyoxyalkylenes, e.g., a polyoxyethylene, a polyoxypropylene, a polyoxybutylene, a polyoxytetramethylene, a polyoxyethylene-polyoxypropylene copolymer and a polyoxypropylene-polyoxybutylene copolymer; hydrocarbon polymers, e.g., a polyisobutylene, a polyethylene, and a copolymer of isoprene with a polypropylene or a polyisobutylene; a polyurethane; a polyamide; a polyacrylate; a polymethacrylate; and a polycarbonate. The polymer group Y is bonded to one or more groups of -[CH₂-SiR¹ₐ(OR²)₃₋ₐ] via -O-C(=O)-NH- or - NH-C(=O)O-.

More preferably, the group Y in the formula (1) includes a polyoxypropylene-containing urethane group or a polyoxypropylene group.

Here, the silane-modified polymer (A) can have a group of -[(CH₂)-SiR¹ₐ(OR²)₃₋ₐ] bonded in the described manner at a terminal thereof.

The number of the group of -[(CH₂)-SiR¹ₐ(OR²)₃₋ₐ)] in one molecule of the component (A) is not particularly limited, and may be 1.5 or more and 2.2 or less, and more preferably 1.7 or more and 2.1 or less.

The component (A) may be a linear polymer having the group of -[(CH₂)-SiR¹ₐ(OR²)₃₋ₐ] at each of the terminals of the molecular chain.

In one particularly preferred embodiment of the present invention, the silane-modified polymer (A) includes a silane-terminated polyether, more particularly a silane-terminated polypropylene glycol, having a dimethoxymethylsilyl terminal group bonded by a group of -O-C(=O)-NH-(CH₂)

The number-average molecular weight Mn of the silane-modified polymer (A) may preferably be 400 or more and 30,000 or less, and is preferably 1,000 or more and 30,000 or less, more preferably 10,000 or more and 30,000 or less, and still more preferably 10,000 or more and 19,000 or less.

The viscosity of the silane-modified polymer (A), which is measured at 20°C in any case, is preferably at least 0.2 Pa·s, more preferably at least 1 Pa·s, and most preferably at least 5 Pa·s, and is preferably 1,000 Pa·s or less, more preferably 700 Pa·s or less.

It is even more preferable if the viscosity is 5 Pa·s or more and 100 Pa·s or less. The silane-modified polymer (A) with a lower viscosity has a relatively shorter chain length of the polymer chain and a higher content of the group of - [(CH₂)-SiR¹ₐ(OR²)₃₋ₐ], which contributes to crosslinking. Therefore, the use of the silane-modified polymer (A) with a lower viscosity can provide a cured product having a higher crosslinking density and better tensile strength and elongation.

In a first particularly preferred embodiment of the present invention, the silane-modified polymer (A) includes, as the polymer group Y, a linear or branched polyoxyalkylene group, more preferably a polyoxypropylene group whose chain terminals are bonded to one or more groups of -[(CH₂)-SiR¹ₐ(OR²)₃₋ₐ] preferably by -O-C(=O)-NH-. Herein, preferably at least 85%, more preferably at least 90%, and more particularly at least 95% of the entire chain terminals are bonded to the group of -[(CH₂)-SiR¹ₐ(OR²)₃₋ₐ] by -O-C(=O)-NH-.

The polyoxyalkylene group Y has a number-average molecular weight Mn of 200 to 30,000, preferably from 10,000 to 19,000. Appropriate methods for preparing such a silane-modified polymer (A) and examples of the silane-modified polymer (A) have already been known and are described in publications, including EP1535940B1 and EP1896523B1. The corresponding silane-terminated polymers are also commercially available, for example, from Wacker Chemie AG under the product name of GENIOSIL (registered trademark) STP-E.

When the silane-modified polymer (A) is chemically synthesized, it can be synthesized by various known production methods using, for example, a reaction between an isocyanate crosslinkable compound and a compound containing an isocyanate-reactive group.

The content of the silane-modified polymer (A) relative to the entire composition is not particularly limited, and for example, is preferably in a range of 5 parts by mass or more and 90 parts by mass or less, more preferably in a range of 5 parts by mass or more and 80 parts by mass or less, and even more preferably in a range of 10 parts by mass or more and 70 parts by mass or less. This is because if the content thereof is 5 parts by mass or more, the following effects can be obtained: no component other than the component forming the polymer matrix remains in the composition in a large amount; desired properties as a composition are sufficiently exhibited; the amount of the polymer matrix to be formed is sufficient, so that required mechanical properties such as tensile strength, elongation, and tear strength become sufficient; defects in a cured product such as adhesion failure, cracking of film, and the like are less likely to occur; and the possibility of causing adverse effects due to not-intended components is reduced. More preferably, the content thereof is in a range of 10 parts by mass or more and 60 parts by mass or less. When the moisture-curable composition of the present invention is used as an adhesive or a sealing material, it is preferable to add hydrophobized inorganic particles, which will be described later, to the composition in order to impart appropriate thixotropy. In order to mix a sufficient amount of the filler with the composition, the amount of the component (A) to be added preferably falls within the above-mentioned range.

### Component (B):

The polymer (B) in the present invention is a polymer (B) containing one type alone of (meth)acrylate monomer unit and such (meth)acrylate monomer is methyl(meth)acrylate and containing a crosslinkable silyl group in the molecule. The crosslinkable silyl group may be introduced at the terminal of the main chain of the (meth)acrylate polymer or into the side chain thereof, or may be introduced both at the terminal of the main chain and into the side chain.

The crosslinkable silyl group contained in the component (B) has a structure represented by the following formula (2):

-SiR¹ₐX₃₋ₐ (2)

wherein a is 0, 1, or 2. R¹(s) is the same as those defined in the above-mentioned formula (1), and preferably a methyl group, an ethyl group or a propyl group, particularly preferably a methyl group. Xs each independently represent a hydroxyl group or a hydrolyzable group. The number of a can be appropriately determined according to the reactivity of the component (B) and the like. For example, in applications where certain strength is required, a is preferably designed to zero (0) since the crosslinking point can be increased. In applications where its reactivity is suppressed or elongation of a cured product thereof is required, a is preferably designed to be 1 or 2.

Specific examples of X include a hydroxyl group, a hydrogen atom, a halogen atom, an alkoxy group, an acyloxy group, a ketoxymate group, an amino group, an amide group, an acid amide group, an aminooxy group, a mercapto group, and an alkenyloxy group. Among these, an alkoxy group such as a methoxy group or an ethoxy group is more preferable, and a methoxy group or an ethoxy group is particularly preferable because the hydrolyzability is moderate and makes the handling of the compound easy.

Specific examples of the crosslinkable silyl group (SiR¹ₐX₃₋ₐ) include, but are not limited to, a trimethoxysilyl group, a triethoxysilyl group, a tris(2-propenyloxy)silyl group, a triacetoxysilyl group, a dimethoxymethylsilyl group, a diethoxymethylsilyl group, a dimethoxyethylsilyl group, a (chloromethyl)dimethoxysilyl group, a (chloromethyl)diethoxysilyl group, a (methoxymethyl)dimethoxysilyl group, a (methoxymethyl)diethoxysilyl group, an (N,N-diethylaminomethyl)dimethoxysilyl group, and an (N,N-diethylaminomethyl)diethoxysilyl group. Among these, a methyldimethoxysilyl group, a trimethoxysilyl group, a triethoxysilyl group, a (chloromethyl)dimethoxysilyl group, a (methoxymethyl)dimethoxysilyl group, a (methoxymethyl)diethoxysilyl group, and an (N,N-diethylamminomethyl)dimethoxysilyl group are preferable since they show a high activity and a cured product having good mechanical properties can be obtained from the composition including the component (B) with such a group. From the viewpoint of activity, a trimethoxysilyl group, a (chloromethyl)dimethoxysilyl group, and a (methoxymethyl)dimethoxysilyl group are particularly preferred. From the viewpoint of stability, a methyldimethoxysilyl group, a methyldiethoxysilyl group, and a triethoxysilyl group are particularly preferred. From the viewpoint of safety, a methyldiethoxysilyl group and a triethoxysilyl group are particularly preferred. A trimethoxysilyl group, a triethoxysilyl group, and a dimethoxymethylsilyl group are more preferred because of ease of production.

The average number of the crosslinkable silyl group per molecule in the component (B) is preferably 0.2 or more, and more preferably 0.4 or more, still more preferably 0.7 or more from the viewpoint of strength after curing. Since the elongation of the cured product tends to be better, the average number of the crosslinkable silyl group is preferably 4.0 or less, and more preferably 3.0 or less. The average number of the crosslinkable silyl group per molecule of the component (B) may be 0.2 or more and 4.0 or less, and more preferably 0.7 or more and 3.0 or less.

The (meth)acrylate polymer (B) contains one type alone of (meth)acrylate monomer unit and such (meth)acrylate monomer is methyl(meth)acrylate.

The alkyl group ester-bonded to (meth)acrylic acid in the (meth)acrylate monomer has 1 carbon atom. When the alkyl group is methyl, the adhesive properties before water immersion and those after water immersion after curing of the moisture-curable composition become better.

It is particularly preferable to use, as the component (B), a compound which is a polymer containing a methyl (meth)acrylate monomer as a monomer unit and has a trimethoxysilyl group. In this case, it is possible to set both ordinary state tensile adhesion strength and water-resistant tensile adhesion strength (which will be described later) to 1.0 N/mm² or higher, and to exhibit properties in which the water-resistant tensile adhesion strength becomes greater than the ordinary state tensile adhesion strength.

The component (B) can be synthesized by publicly known methods, or commercially available polymers can be adopted as the component (B). Examples of the commercially available product usable as the component (B) include the XMAP series (product name of Kaneka Corporation), the ARUFON US-6000 series (product name of Toagosei Corporation, including US-6110, US-6120 and the like), and the ACTFLOW NE series (product name of Soken Chemical & Engineering Co., Ltd., including NE-1000, NE-3000, and the like).

The molecular weight of the component (B) is not limited to particular values, and may be, for example, 1,000 or more and 100,000 or less, more preferably 1,000 or more and 50,000 or less, and still more preferably 1,000 or more and 10,000 or less. When the molecular weight of the component (B) falls within the above-mentioned range, the viscosity of the moisture-curable composition tends to be sufficiently low, and the handleability thereof tends to be excellent.

The content of the component (B) relative to the entire composition is not particularly limited, and for example, is preferably in a range of 5 parts by mass or more and 90 parts by mass or less, more preferably in a range of 5 parts by mass or more and 80 parts by mass or less, and even more preferably in a range of 10 parts by mass or more and 70 parts by mass or less. This is because if the content thereof is 5 parts by mass or more, the following effects can be obtained: no component other than the component forming the polymer matrix remains in the composition in a large amount; desired properties as a composition are sufficiently exhibited; the amount of the polymer matrix to be formed is sufficient, so that required mechanical properties such as tensile strength, elongation, and tear strength become sufficient; defects in a cured product such as adhesion failure, cracking of film, and the like are less likely to occur; and the possibility of causing adverse effects due to not-intended components is reduced. More preferably, the content thereof is in a range of 10 parts by mass or more and 60 parts by mass or less.

When the moisture-curable composition of the present invention is used as an adhesive or a sealing material, it is preferable to add hydrophobized inorganic particles, which will be described later, to the composition in order to impart appropriate thixotropy. In order to mix a sufficient amount of the filler with the composition, the amount of the component (B) to be added preferably falls within the above-mentioned range.

### Component (C):

The amine-based catalyst (C) in the present invention is a curing catalyst having at least one alkoxy group, and also functions as an adhesion improver.

In the moisture-curable composition of the present invention, a catalyst other than the component (C) can be used in combination, but it is desirable to use no catalyst containing a metal from the viewpoint of environment and safety.

The component (C) may be, for example, an alkoxyamine, an aralkoxyamine, or an aminosilane having an alkoxy group. Among these, an aminosilane having an alkoxy group is particularly preferable.

Examples of the alkoxyamines include 2-(2-aminoethoxy)ethanol, ethanolamine, trihydroxymethylaminomethane, methoxyamine, and ethoxyamine.

Examples of the aminosilanes include aminopropyltrimethoxysilane, aminopropyltriethoxysilane, aminopropylmethyldimethoxysilane, aminopropylmethyldiethoxysilane, N-(2-aminoethyl)aminopropyltrimethoxysilane, N-(2-aminoethyl)aminopropyltriethoxysilane, N-(2-aminoethyl)aminopropylmethyldimethoxysilane, N-(2-aminoethyl)aminopropylmethyldiethoxysilane, N-cyclohexylaminomethyltriethoxysilane, N-cyclohexylaminomethyl-methyldiethoxysilane, N-cyclohexylaminomethyl-trimethoxysilane, and N-cyclohexylaminomethyl-methyldimethoxysilane. When any of these aminosilanes is used, it is possible to obtain a moisture-curable composition having a suitable curing rate.

The number of the amino groups in the component (C) is not particularly limited as long as it is one or more. When two or more amino groups are included, adhesive strength tends to be further improved.

When suitable adhesive properties are required in the composition including the components (A) and (B) described above, the component (C) preferably has a plurality of amino groups. Examples of the component (C) include N-(2-aminoethyl)aminopropyltrimethoxysilane, N-(2-aminoethyl)-aminopropyltriethoxysilane, N-(2-aminoethyl)aminopropylmethyldimethoxysilane, and N-(2-aminoethyl)aminopropylmethyldiethoxysilane.

When discoloration, such as yellowing, of the cured product obtained using the composition including the components (A) and (B) described above is suppressed as much as possible, the component (C) preferably has one amino group. Examples of the component (C) include 2-(2-aminoethoxy)ethanol, ethanolamine, trihydroxymethylaminomethane, methoxyamine, ethoxyamine, aminopropyltrimethoxysilane, aminopropyltriethoxysilane, aminopropylmethyldimethoxysilane, aminopropylmethyldiethoxysilane, N-cyclohexylaminomethyltriethoxysilane, N-cyclohexylaminomethyl-methyldiethoxysilane, N-cyclohexylaminomethyl-trimethoxysilane, and N-cyclohexylaminomethyl-methyldimethoxysilane.

The amine-based catalyst (C) in the present invention is not limited to the above-mentioned alkoxyamine, aralkoxyamine, and aminosilane having an alkoxy group, and may be any amine-based catalyst capable of curing the composition to exhibit adhesive properties by the same mechanism.

The amine-based catalyst (C) in the present invention can act as a curable catalyst and/or an adhesion promoter in the moisture-curable composition according to the present invention.

The amine-based catalyst (C) used according to the present invention is a commercially available product and can be produced by commonly used chemical processes.

The content of the component (C) relative to the entire moisture-curable composition is not particularly limited, and is preferably, for example, in a range of 0.1 parts by mass or more and 10 parts by mass or less. When the content thereof is 0.1 parts by mass or more, the hydrolysis and condensation reactions of the silane-modified polymer can be accelerated. On the other hand, if the content is less than 0.1 parts by mass, the effect of catalyzing the hydrolysis and condensation reactions decreases, and at the same time, the exhibited adhesive properties decrease. If the content exceeds 10 parts by mass, the hydrolysis and condensation reactions may proceed during storage of the moisture-curable composition, and the storage stability may deteriorate, causing gelation, curing and the like during storage. More preferably, the content thereof is in a range of 0.5 parts by mass or more and 5 parts by mass or less.

Other raw materials in moisture-curable composition:
The form and composition content of the moisture-curable composition that is used as an adhesive or a sealing material for various substrates for various applications are not limited.

As an adhesive composition suitable for substrates for typical applications, such as an architectural material and an industrial construction, the following composition is preferred.
(A): 5 parts by mass or more and 90 parts by mass or less,
(B): 5 parts by mass or more and 90 parts by mass or less,
(C): 0.01 parts by mass or more and 10 parts by mass or less,
(D): a plasticizer: 0 part by mass or more and 50 parts by mass or less
(E): a dehydrating agent: 0 part by mass or more and 10 parts by mass or less,
(F): an adhesion improver: 0 part by mass or more and 5 parts by mass or less,
(G): hydrophobized inorganic particles: 0.1 parts by mass or more and 20 parts by mass or less,
(H): a filler: 0 part by mass or more and 80 parts by mass or less, and
(I): a stabilizer: 0.01 parts by mass or more and 5 parts by mass or less.

The amount in parts by mass of each component represents the value relative to 100 parts by mass of the entire moisture-curable composition.

### Component (D):

The plasticizer (D) is a component that has a function of adjusting degree of viscosity and viscous properties of the moisture-curable composition of the present invention and can also serve as an agent for adjusting physical properties such as tensile strength and elongation or as an additive that improves flexibility and weather resistance of the cured product. This component is not an essential component for the moisture-curable composition of the present invention if the function or action described above is not required. The plasticizer (D) may be purchased as a commercial product and also may be prepared by commonly used chemical methods.

Examples of the plasticizer (D) include a phthalic acid ester, e.g., dioctyl phthalate, diisooctyl phthalate, and diundecyl phthalate; a perhydrogenated phthalic acid ester, e.g., diisononyl 1,2-cyclohexanedicarboxylate and dioctyl 1,2-cyclohexanedicarboxylate; an adipic acid ester, e.g., dioctyl adipate; a benzoic acid ester; a glycol ester; an ester of saturated alkanediol, e.g., 2,2,4-trimethyl-1,3-pentanediol monoisobutyrate and 2,2,4-trimethyl-1,3-pentanediol diisobutyrate; a phosphoric acid ester; a sulfuric acid ester; a polyester; a polyether, e.g., polyethylene glycol and polypropylene glycol, preferably having 100 to 10,000 g/mol; polystyrene; polybutadiene; polyisobutylene; a paraffinic hydrocarbon; and a branched macromolecular hydrocarbon.

The content of the plasticizer (D) relative to the entire composition may be zero (not included), but is preferably in a range of 0 to 50 parts by mass. This is because if the content thereof exceeds 50 parts by mass, there are a possibility of causing adverse effects such as deterioration of physical properties of the cured product and a possibility of causing curing failure and uncured state after application. More preferably, the content of the plasticizer (D) is in a range of 0 to 30 parts by mass.

### Component (E):

The dehydrating agent (E) is a component that can cause dehydration by capturing water in the moisture-curable composition of the present invention.

The dehydrating agent (E) may be purchased as a commercial product and also may be prepared by commonly used chemical methods.

The dehydrating agent (E) may be used alone or a mixture of two or more types thereof may be used in combination.

Examples of the component (E) include silanes, e.g., vinyltrimethoxysilane, vinyltriethoxysilane, vinylmethyldimethoxysilane, methyl O-methylcarbamate-methyldimethoxysilane, methyl O-methylcarbamate-trimethoxysilane, methyl O-ethylcarbamate-methyldiethoxysilane, and methyl O-ethylcarbamate-triethoxysilane, and/or their partial condensates, and orthoesters, e.g., 1,1,1-trimethoxyethane, 1,1,1-triethoxyethane, trimethoxymethane, and triethoxymethane.

The content of the dehydrating agent (E) relative to the entire composition may be zero (not included), but is preferably in a range of 0.01 to 10 parts by mass. This is because if the content thereof is less than 0.01 parts by mass, the effect of dehydration is not sufficient, and there is a possibility that defects such as thickening, gelation, and curing occur during the production and storage, and if the content thereof exceeds 10 parts by mass, there is a possibility that adverse effects such as deterioration of physical properties of a cured product may occur, and there is also a possibility that curing failure and uncured state after the application may occur. More preferably, the content of the dehydrating agent (E) is in a range of 0.5 to 3.0 parts by mass.

### Component (F):

The adhesion improver (F) is a component that has a function as a curing co-catalyst and can also serve as an adhesion promoter for the moisture-curable composition of the present invention. The adhesion improver (F) is not particularly limited in terms of its structure and molecular weight, and may be purchased as a commercial product and also may be prepared by commonly used chemical methods. The adhesion improver (F) may be used alone or a mixture of two or more types thereof may be used in combination.

Examples of the adhesion improver (F) may include organosilicon compounds, for example epoxysilanes and isocyanurate silanes. Representative examples include 3-glycidoxypropyltrimethoxysilane, 3-glycidoxypropyltriethoxysilane, tris(3-trimethoxysilylpropyl)isocyanurate, and triglycidyl isocyanurate.

The content of the adhesion improver (F) relative to the entire composition may be zero (not included), but is preferably in a range of 0.01 to 5 parts by mass. This is because if the content thereof exceeds 5 parts by mass, there are a possibility of causing adverse effects such as deterioration of physical properties of the coating film and a possibility of causing curing failure and uncured state after application.

### Component (G):

The hydrophobized inorganic particles (G) optionally mixed impart a certain degree of thixotropic properties to the moisture-curable composition of the present invention by forming a network in the system by van der Waals forces to thicken the entire system.

Examples of the inorganic particles used as raw materials for the hydrophobized inorganic particles (G) include silica, titanium dioxide, bentonite, zinc oxide, talc, kaolin, mica, vermiculite, magnesium carbonate, calcium carbonate, aluminum silicate, barium silicate, calcium silicate, magnesium silicate, strontium silicate, tungsten acid metal salts, magnesium, zeolite, barium sulfate, calcined calcium sulfate, calcium phosphate, fluoroapatite, hydroxyapatite, metal soaps, and the like inorganic particles.

Furthermore, composite particles obtained by coating particles with a metal oxide or the like, or modified particles whose surfaces are treated with a compound or the like may be used.

Usually, on the surface of these particles, there are a moiety covered with a hydrophilic group such as a silanol group, a carbinol group, or other hydroxyl groups, and a moiety covered with a group obtained by hydrophobizing the forgoing groups with an alkyl group or the like, or with other hydrophobic groups.

By adjusting the ratio of the hydrophilic group to the hydrophobic group, the cohesiveness and solubility of the inorganic particles in the system can be controlled.

Among the inorganic particles, silica is preferably used. Exemplary types of silica include fumed silica, wet silica, and colloidal silica. On the surface of particles of any types of silica, a silanol that is hydrophilic exists, and a silanol group thereof can be subjected to a hydrophobic treatment with an alkyl group or the like at an optional ratio. Therefore, the molar ratio of a hydrophilic group and a hydrophobic group on the surface is easily set. Silica is preferable from the viewpoint of use of an aggregated structure, high affinity with various types of oil, availability, and cost efficiency. This is because a wide use application is made possible.

In the present invention, the most preferably used silica is fumed silica.

Fumed silica particles have a multidimensional aggregation structure. Therefore, a balance between the hydrophilic group and the hydrophobic group on the surface can be controlled according to its aggregation level, and aggregation units can be recombined.

Since the fumed silica particles have a porous structure, the surface area is large, and functions of association and adsorption are enhanced. Therefore, the system using the fumed silica particles can be more stably and uniformly produced.

In the fumed silica particles, primary particles, which are the smallest unit, generally have a size of about 5 to 30 nm. The primary particles are aggregated to form primary aggregates, that is, secondary particles.

The size of the primary aggregates is generally about 100 to 400 nm. Since the primary particles are fused through a chemical bond, it is generally difficult to separate the primary aggregates from one another. From the primary aggregates, an aggregated structure is formed, which is called secondary aggregate, that is, tertiary particle. The size of the secondary aggregates is generally about 10 µm. An aggregation form between the primary aggregates in the secondary aggregates is generally derived not by a chemical bond but by a hydrogen bond and a Van der Waals force.

When the fumed silica particles are in a powder shape, the secondary aggregates are often in the largest aggregation state. However, the secondary aggregates can be further aggregated in the moisture-curable composition. That is, in one example of the present invention, the hydrophobized silica effectively forms a network with respect to the hydrophobic moieties of the silane-terminated modified polymer and a material with a reactivity (reactive diluent) through a Van der Waals force. A force for separating such aggregation is less than a force of separating the secondary aggregates. That is, in one example of the present invention, when the moisture-curable composition is applied with a combing trowel or the like, the aggregation is separated to decrease the viscosity during the application.

It is preferable that the fumed silica particles be hydrophobic or hydrophobized. A component used in hydrophobization is not particularly limited. For example, the component used in hydrophobization can be made hydrophobic by a known method such as treatment with a halogenated organic silicon, e.g., methyltrichlorosilane, an alkoxysilane, e.g., dimethyldialkoxysilane, silazane, or a low-molecular-weight methylpolysiloxane.

The content of the hydrophobized inorganic particles (G) relative to the entire composition may be zero (not included), but is desirably 0.1 to 20 parts by mass. This is because if the content thereof exceeds 20 parts by mass, the viscosity of the entire system is increased, and there is a possibility that the system may be made ununiform due to insufficient stirring during production of the moisture-curable composition, and the workability during application may be significantly reduced. The content thereof is more preferably in a range of 1 to 10 parts by mass, and further preferably in a range of 2 to 5 parts by mass.

### Component (H):

The filler (H), which is optionally added, has functions of an extender, adjustment of viscosity or tacking, and adjustment of physical properties such as tensile strength and elongation of the moisture-curable composition of the present invention, and can serve as a curing accelerator for a coating material by contained moisture. The filler (H) is a component other than the component (G). When the above-mentioned function and action are unnecessary, this component is not an essential component when the moisture-curable composition of the present invention is used as a coating material composition.

The filler (H) may be purchased as a commercial product and also may be prepared by commonly used chemical methods.

The filler (H) may be used alone or a mixture of two or more types thereof may be used in combination.

The filler (H) is not limited as long as it exhibits the foregoing functions and actions. Examples of the filler (H) include a non-reinforcing filler, and preferably a filler having a BET surface area of 50 m²/g at the maximum, e.g., quartz, silica sand, diatomaceous earth, calcium silicate, zirconium silicate, talc, kaolin, and zeolite, a powder of metal oxide including aluminum oxide, titanium oxide, iron oxide, or zinc oxide, and/or mixed oxides thereof, barium sulfate, calcium carbonate, gypsum, silicon nitride, silicon carbide, boron nitride, a glass powder, and a polymer powder, e.g., a polyacrylonitrile powder; a reinforcing filler, and a filler having a BET surface area exceeding 50 m²/g, e.g., silica prepared by pyrolyzed, precipitated silica, precipitated calcium carbonate, heavy calcium carbonate, carbon black, e.g., furnace black and acetylene black, and mixed silicon/aluminum oxides having high BET surface area; a filler in the form of a hollow bead of aluminum trihydroxide, e.g., magnetic microbeads that are exemplified by a product available as trade name Zeeospheres (registered trademark) from 3M Deutschland GmbH of Neuss, Germany, elastic polymeric beads of this type, available as trade name EXPANCEL (registered trademark) from AKZONOBEL, Expancel, Sundsvall, Sweden, or glass beads; and a filler in a fiber form, e.g., asbestos and/or polymeric fillers.

For example, the above-mentioned fillers may be hydrophobized by a treatment with organosilane and/or organosiloxane or with stearic acid or by etherification of a hydroxyl group to an alkoxy group.

The filler (H) is preferably calcium carbonate, talc, aluminum hydroxide or silica, with calcium carbonate being particularly preferable. The preferable grade of calcium carbonate is ground or precipitated one and is optionally surface treated with a fatty acid such as stearic acid or a salt thereof. The preferable silica is pyrolyzed (fumed) silica.

The filler (H) preferably has a water content of less than 1 part by mass, more preferably less than 0.5 parts by mass.

The content of the filler (H) relative to the entire composition is preferably in a range of 0 to 80 parts by mass, and more preferably in a range of 0 to 60 parts by mass. When the content thereof falls within the above-mentioned range, defects of the coating material such as poor adhesion and cracking of the film are hardly caused, and the viscosity during production is suitable. Therefore, uniform stirring can be achieved.

### Component (I):

The stabilizer (I) is a component that has a function of an ultraviolet absorber, an antioxidant, a thermal stabilizer, or a light stabilizer for the moisture-curable composition of the present invention, and can also function as a stabilizer against deterioration of a polymer.

The stabilizer (I) may be purchased as a commercial product and also may be prepared by commonly used chemical methods.

The stabilizer (I) may be used alone or a mixture of two or more types thereof may be used in combination.

The stabilizer (I) is not limited as long as it exhibits the above-mentioned functions and actions, and is preferably an antioxidant, an ultraviolet stabilizer, or a HALS.

The content of the stabilizer (I) relative to the entire composition is preferably in a range of 0.01 to 5 parts by mass. This is because if the content thereof is less than 0.01 parts by mass, the coating film may deteriorate by ultraviolet light, heat, oxidation, or the like, and if the content exceeds 5 parts by mass, an unexpected trouble, for example, color change in a transparent product, may be caused. The content thereof is more preferably in a range of 0.5 to 2.0 parts by mass.

The moisture-curable composition of the present invention may include any one or two or more selected from the group consisting of octamethylcyclotetrasiloxane (D4), decamethylcyclopentasiloxane (D5) dodecamethylcyclohexasiloxane (D6), tetradecamethylcycloheptasiloxane (D7), and hexadecamethylcyclooctasiloxane (D8).

The total sum of the respective contents of (D4), (D5), (D6), (D7), and (D8) may be less than 0.1 parts by mass (i.e., less than 1,000 ppm) relative to 100 parts by mass of the entire moisture-curable composition.

When the total sum of the contents of (D4) to (D8) in the moisture-curable composition falls within the above-mentioned range, the flash point of the composition as a whole becomes high, and safety during storage can be improved.

When the total sum of the contents of (D4) to (D8) is designed to be less than 0.1 parts by mass relative to 100 parts by mass of the entire moisture-curable composition, the moisture-curable composition can be produced by using components that serve as the components (A), (B) and (C) and contain (D4) to (D8) in a total content of less than 0.1% by mass.

The contents of (D4) to (D8) are determined by gas chromatography. The measurement conditions for gas chromatography may be appropriately selected according to conventionally known methods.

A method of reducing the contents of (D4) to (D8) in the components (A) to (C) includes a method of performing heating under reduced pressure, which is widely known. For example, it is desirable to perform heat treatment under reduced pressure for about 8 hours at 180°C and 20 mmHg when producing the raw materials for the components (A) to (C).

The moisture-curable composition of the present invention may contain an optional component in addition to the above-mentioned components as long as the object of the present invention is achieved. For example, the moisture-curable composition of the present invention may contain a deformer, a curing rate adjuster, additives for this type of composition, and any other suitable materials.

The present invention also provides a method of improving water-resistant adhesive properties by bonding a substrate and a cured product obtained by curing a moisture-curable composition, which includes:
the component (A) which is selected from **α**-silane-terminated polymers having the crosslinkable alkoxysilyl group bonded to an adjacent urethane unit via a methylene spacer and represented by the general formula (1):

   Y-[CH₂-SiR¹ₐ(OR²)₃₋ₐ]ₓ (1)
wherein Y is an x-valent polymer group bonded via said urethane unit to the group -[CH₂-SiR¹ₐ(OR)₃₋ₐ]ₓ, R¹ is a monovalent, optionally substituted SiC-bonded hydrocarbon group,
R²(s) may be the same as or different from each other and is a hydrogen atom or a monovalent, optionally substituted hydrocarbon group,
x is an integer of 1 to 10, and
a is 1;
a polymer (B) (component B) containing one type alone of (meth)acrylate monomer unit and such (meth)acrylate monomer is methyl (meth) acrylate and containing a crosslinkable silyl group in the molecule; and
the component (C) that is an amine-based catalyst having at least one alkoxy group,
the method including: using the moisture-curable composition that includes the component (B) that is a methyl (meth) acrylate homopolymer containing a crosslinkable silyl group in the molecule to make a tensile adhesion strength between the substrate and the cured product after performing a water immersion test, in which the substrate and the cured product are immersed in water at 23°C for 168 hours, 1.0 times or more of a tensile adhesion strength before performing the water immersion test.

The water-resistant adhesive properties can be evaluated as follows. The tensile adhesion strength of a sample after curing at 23°C for 168 hours is measured. The sample after curing at 23°C for 168 hours is immersed in distilled water at 23°C for 168 hours, taken out from the distilled water, and aged at 23°C for 168 hours, and the tensile adhesion strength of the sample is measured.

By curing, the moisture-curable composition can be used as an adhesive or a sealing material for bonding substrates.

The present invention is also a laminated body including a substrate and a cured product, which is obtained by applying the moisture-curable composition to the substrate and curing the moisture-curable composition.

The substrate to which the moisture-curable composition of the present invention is applied for bonding is not particularly limited. The substrate may be concrete, mortar, a plaster board, a softwood board, a woody cement board, a calcium silicate board, or a tile. The substrate may be pretreated with a primer.

Herein, it is also disclosed a method for producing a laminated body including a first substrate, a second substrate, and a cured product that bonds the first substrate to the second substrate, the method including:
applying the above-mentioned moisture-curable composition to a surface of the first substrate; and
bringing the second substrate into contact with the moisture-curable composition and then curing the moisture-curable composition to form the cured product.

### Examples

The present invention will be specifically described with reference to Examples, Reference Examples and Comparative Examples on the basis of results shown in Tables 1 and 2. However, the present invention is not limited to the following Examples.

### Method for producing sample for evaluation of tensile adhesive properties:

A method for producing a sample is in accordance with JIS A 5536.

An adhesive tape defined by JIS Z 1525 was attached to four sides of a substrate A such that the width of the adhesive tape covering the substrate A was 7 mm with a smooth face of the substrate A faced upward. A proper amount of the moisture-curable composition was placed on the substrate A, and a combing trowel of SS330 defined by JIS G 3101 was obliquely erected and then pulled toward a user with the user's hands to uniformly apply the moisture-curable composition to the substrate A. Immediately after the application of the moisture-curable composition, the adhesive tape was detached and removed. After the application of the moisture-curable composition, a substrate B was placed such that the moisture-curable composition was disposed between the substrates A and B, and a weight of about 1 kg was placed on the substrate B such that the film of the moisture-curable composition was compressed to a thickness of about 1 mm. Thus, the moisture-curable composition was in close contact with the substrates A and B. The moisture-curable composition was then aged under the following aging condition A or B.

On the day before implementation of a tensile adhesion strength measurement test, a proper amount of an epoxy resin (water-immersion epoxy available from CEMEDINE CO., LTD.) was applied to the substrate B of the sample (on a side where the moisture-curable composition was not applied), and a stainless steel jig for a tensile test (SS400, 10 mm × 40 mm × 40 mm, M10 nut welding) was fixed in place.
Substrate A: ISO mortar (70 mm × 70 mm × 20 mm)
Substrate B: aluminum cleaned with ethanol (A5052, 25 mm × 60 mm × 2 mm)

### Aging condition A: Ordinary state adhesive properties

The sample in which the substrates A and B were bonded by the moisture-curable composition was aged under conditions of a temperature of 23°C and a relative humidity of 50% for 168 hours. Immediately thereafter, a tensile test was performed.

### Aging condition B: Water-resistant adhesive properties

The sample in which the substrates A and B were bonded by the moisture-curable composition was aged under conditions of a temperature of 23°C and a relative humidity of 50% for 168 hours. The sample was then immersed in water. For water immersion, the sample was immersed in distilled water such that a distance from the upper portion of the sample to a water surface was about 3.5 cm, and then the sample was allowed to stand at 23°C for 168 hours. After the immersion, the sample was aged at 23°C and a relative humidity of 50% for 168 hours, and a tensile test was performed.

### Method for evaluating tensile adhesion strength:

The tensile adhesion strength of the sample prepared by the method for producing a sample for evaluation of tensile adhesive properties was measured and evaluated by the following device under the following measurement condition.
Evaluation device: table-top precision universal tester (Autograph AGS-X series (manufactured by Shimadzu Corporation))
Tensile rate: 1 mm/min
Unit of measured value: tensile adhesion strength (N/mm²) calculated from maximum load (N) before rupture

The ordinary state adhesive properties were evaluated by the above-mentioned method after the sample was aged under the aging condition A. A tensile adhesion strength of 0.75 N/mm² or more was determined to be acceptable. The measurement result for tensile adhesion strength obtained at this time refers to "ordinary state tensile adhesion strength (N/mm²)".

The water-resistant adhesive properties were evaluated by the above-mentioned method after the sample was aged under the aging condition B. A tensile adhesion strength of 0.50 N/mm² or more was determined to be acceptable. The measurement result of tensile adhesion strength obtained at this time refers to "water-resistant tensile adhesion strength (N/mm²)".

### Method for evaluating water-resistant adhesive properties:

It is preferable that a value obtained by dividing the ordinary state tensile adhesion strength (N/mm²) by the water-resistant tensile adhesion strength (N/mm²) be 1.0 or more.

### Method for evaluating rubber properties:

The tensile strength of the moisture-curable composition was evaluated in accordance with JIS K 6251. A tensile strength of 1.5 N/mm² or more was determined to be acceptable.

The elongation of the moisture-curable composition was evaluated in accordance with JIS K 6251. An elongation of 55 to 100% was determined to be acceptable.

### Method for evaluating storage stability:

Immediately after production of the moisture-curable composition, the moisture-curable composition was stored at 50°C for 28 days, and the external appearance after the storage was evaluated. When the external appearance was determined to satisfy classification A, the storage stability was determined to be acceptable.
Classification A: a state where aggregation or separation is not observed in the moisture-curable composition
Classification B: a state where aggregation or separation is observed in the moisture-curable composition

### Example 1:

For a moisture-curable composition, the following components were used.

To 15.0 parts by mass of GENIOSIL (registered trademark) STP-E 30 available from Wacker Chemie AG (the viscosity at 25°C was 30,000 mPa·s, in the above-mentioned general formula (1), Y is a divalent organic polymer group bonded via a urethane group containing an oxyalkylene group as a polymer chain, R¹ and R² are each a methyl group, a is 1, and x is 2) as the silane-modified polymer (A), 10 parts by mass of a methyl (meth)acrylate polymer having three trimethoxysilyl groups in total in the side chain and at the terminal as the (meth)acrylate polymer (B), 2.5 parts by mass of GENIOSIL (registered trademark) GF 96 available from Wacker Chemie AG as the amine-based catalyst (C), 21.0 parts by mass of polypropylene glycol (diol type, molecular weight: 400) available from FUJIFILM Wako Pure Chemical Corporation as the plasticizer (D), 2.0 parts by mass of GENIOSIL (registered trademark) XL 10 available from Wacker Chemie AG as the dehydrating agent (E), 2 parts by mass of GENIOSIL (registered trademark) GF 80 available from Wacker Chemie AG as the adhesion improver (F), 2.5 parts by mass of hydrophobic silica (HDK (registered trademark) H18) available from Wacker Chemie AG as the hydrophobized inorganic particles (G), 44.0 parts by mass of heavy calcium carbonate (SOFTON 2200 available from BIHOKU FUNKA KOGYO CO., LTD.) as the filler (H), and 1.0 part by mass of hindered amine Tinuvin B75 available from BASF Japan Ltd. as the stabilizer (I) were added and uniformly stirred to prepare a moisture-curable composition 1.
GENIOSIL (registered trademark) GF 96 is 3-aminopropyltrimethoxysilane.
GENIOSIL (registered trademark) XL 10 is vinyltrimethoxysilane.
GENIOSIL (registered trademark) GF 80 is 3-glycidoxypropyltrimethoxysilane.

The ordinary state tensile adhesion strength, water-resistant tensile adhesion strength, tensile strength and elongation, and storage stability of the moisture-curable composition 1 were within acceptable criteria, and the moisture-curable composition 1 was determined to be acceptable.

### Reference Example 2:

A moisture-curable composition 2 was obtained using the same components, the same number of parts by mass, and the same preparation method as those of Example 1 except that 10 parts by mass of an ethyl (meth)acrylate polymer having three trimethoxysilyl groups in total in the side chain and at the terminal was used as the (meth)acrylate polymer (B). The same evaluations as in Example 1 were performed.

The ordinary state tensile adhesion strength, water-resistant tensile adhesion strength, tensile strength and elongation, and storage stability of the moisture-curable composition 2 were within the acceptable criteria, and the moisture-curable composition 2 was determined to be acceptable. The water-resistant tensile adhesion strength and the tensile strength of the moisture-curable composition 2 were lower than those in Example 1, but high elongation was achieved.

### Reference Example 3:

A moisture-curable composition 3 was obtained using the same components, the same number of parts by mass, and the same preparation method as those of Example 1 except that 10 parts by mass of a 2-ethylhexyl (meth)acrylate polymer having three trimethoxysilyl groups in total in the side chain and at the terminal was used as the (meth)acrylate polymer (B). The same evaluations as in Example 1 were performed.

The ordinary state tensile adhesion strength, water-resistant tensile adhesion strength, tensile strength and elongation, and storage stability of the moisture-curable composition 3 were within the acceptable criteria, and the moisture-curable composition 3 was determined to be acceptable. The water-resistant tensile adhesion strength and the tensile strength of the moisture-curable composition 3 were lower than those in Examples 1 and 2, but high elongation was achieved.

### Reference Example 4:

A moisture-curable composition 4 was obtained using the same components, the same number of parts by mass, and the same preparation method as those of Example 1 except that 10 parts by mass of a stearyl (meth)acrylate polymer having three trimethoxysilyl groups in total in the side chain and at the terminal was used as the (meth)acrylate polymer (B). The same evaluations as in Example 1 were performed.

The ordinary state tensile adhesion strength, water-resistant tensile adhesion strength, tensile strength and elongation, and storage stability of the moisture-curable composition 4 were within the acceptable criteria, and the moisture-curable composition 4 was determined to be acceptable. The water-resistant tensile adhesion strength and the tensile strength of the moisture-curable composition 4 were lower than those in Examples 1 and 2, but high elongation was achieved.

### Example 5:

A moisture-curable composition 5 was obtained using the same components, the same number of parts by mass, and the same preparation method as those of Example 1 except that 2.5 parts by mass of GENIOSIL (registered trademark) GF 94 available from Wacker Chemie AG was used as the amine-based catalyst (C). The same evaluations as in Example 1 were performed.

GENIOSIL (registered trademark) GF 94 is 3-(2-aminomethylamino)propyltriethoxysilane.

The ordinary state tensile adhesion strength, water-resistant tensile adhesion strength, tensile strength and elongation, and storage stability of the moisture-curable composition 5 were within the acceptable criteria, and the moisture-curable composition 5 was determined to be acceptable.

### Example 6:

A moisture-curable composition 6 was obtained using the same component, the same number of parts by mass, and the same preparation method as those of Example 1 except that 15.0 parts by mass of GENIOSIL (registered trademark) STP-E 10 available from Wacker Chemie AG (the viscosity at 25°C was 10,000 mPa·s, in the above-mentioned general formula (1), Y is a divalent organic polymer group bonded via a urethane group containing an oxyalkylene group as a polymer chain, R¹ and R² are each a methyl group, a is 1, and x is 2) was used as the silane-modified polymer (A). The same evaluations as in Example 1 were performed.

The ordinary state tensile adhesion strength, water-resistant tensile adhesion strength, tensile strength and elongation, and storage stability of the moisture-curable composition 6 were within the acceptable criteria, and the moisture-curable composition 6 was determined to be acceptable.

When as the component (C), aminopropyltrimethoxysilane was used as described above, the water-resistant tensile adhesion strength between the substrate and the cured product was 1.2 or more times the ordinary state tensile adhesion strength. When as the component (B), a methyl methacrylate polymer was used, the ordinary state tensile adhesion strength and the water-resistance tensile adhesion strength were as high as 1.0 N/mm² or more.

### Comparative Example 1:

A moisture-curable composition 7 was obtained using the same components, the same number of parts by mass, and the same preparation method as those of Example 1 except that 10 parts by mass of a methyl (meth)acrylate polymer not having a silyl group was used instead of the (meth)acrylate polymer (B). The same evaluations as in Example 1 were performed.

The ordinary state tensile adhesion strength, water-resistant tensile adhesion strength, and elongation of the moisture-curable composition 7 were 0.70 N/mm², 0.70 N/mm², and 110%, respectively, and did not satisfy the acceptable criteria. The moisture-curable composition 7 was determined to be unacceptable.

### Comparative Example 2:

A moisture-curable composition 8 was obtained using the same components, the same number of parts by mass, and the same preparation method as those of Example 1 except that 10 parts by mass of butyl acrylate polymer having a trimethoxysilyl group at the terminal was used instead of the (meth)acrylate polymer (B). The same evaluations as in Example 1 were performed.

The ordinary state tensile adhesion strength, water-resistant tensile adhesion strength, and elongation of the moisture-curable composition 8 were 0.40 N/mm², 0.50 N/mm², and 140%, respectively, and did not satisfy the acceptable criteria. The moisture-curable composition 8 was determined to be unacceptable. It is considered that the water-resistant tensile adhesion strength is insufficient due to the use of the acrylate polymer in which the main chain is not (meth)acrylic acid.

### Comparative Example 3:

A moisture-curable composition 9 was obtained using the same components, the same number of parts by mass, and the same preparation method as those of Example 1 except that 10 parts by mass of a 2-ethylhexyl acrylate polymer having a carboxyl group in the side chain and at the terminal was used instead of the (meth)acrylate polymer (B). The same evaluations as in Example 1 were performed.

The ordinary state tensile adhesion strength, water-resistant tensile adhesion strength, tensile strength, and elongation of the moisture-curable composition 9 were 0.40 N/mm², 0.40 N/mm², 1.0 N/mm², and 1,000%, respectively, and did not satisfy the acceptable criteria. The moisture-curable composition 9 was determined to be unacceptable.

### Comparative Example 4:

A moisture-curable composition 10 was obtained using the same components, the same number of parts by mass, and the same preparation method as those of Example 1 except that 10 parts by mass of 2-ethylhexyl acrylate polymer having two hydroxyl groups at the terminal was used instead of the (meth)acrylate polymer (B). The same evaluations as in Example 1 were performed.

The ordinary state tensile adhesion strength, tensile strength, and elongation of the moisture-curable composition 10 were 0.50 N/mm², 1.1 N/mm², and 200%, respectively, and did not satisfy the acceptable criteria. The moisture-curable composition 10 was determined to be unacceptable.

### Comparative Example 5:

A moisture-curable composition 11 was obtained using the same components, the same number of parts by mass, and the same preparation method as those of Example 1 except that 1.0 part by mass of 1,8-diazabicyclo[5.4.0]undec-7-ene available from FUJIFILM Wako Pure Chemical Corporation was used instead of the amine-based catalyst (C) and 22.5 parts by mass of polypropyleneglycol (diol type, molecular weight: 400) available from FUJIFILM Wako Pure Chemical Corporation was used instead of the plasticizer (D). The same evaluations as in Example 1 were performed.

The ordinary state tensile adhesion strength and water-resistant tensile adhesion strength of the moisture-curable composition 11 were each 0.30 N/mm², and did not satisfy the acceptable criteria. The moisture-curable composition 11 was determined to be unacceptable.

### Comparative Example 6:

A moisture-curable composition 12 was obtained using the same component, the same number of parts by mass, and the same preparation method as those of Example 1 except that 15.0 parts by mass of GENIOSIL (registered trademark) STP-E 15 available from Wacker Chemie AG (the viscosity at 25°C was 10,000 mPa·s, represented by a formula: Y-[(CH₂)₃-SiR¹ₐ(OR²)₃₋ₐ] ₓ wherein Y is a divalent organic polymer group bonded via a urethane group containing an oxyalkylene group as a polymer chain, R¹ and R² are a methyl group, a is 0, and x is 2) was used instead of the silane-modified polymer (A). The same evaluations as in Example 1 were performed.

The moisture-curable composition 12 was not cured, and therefore was determined to be unacceptable. It is considered that sufficient curing with the amine-based catalyst is not achieved since the crosslinkable silyl group is at a y position of the polymer chain.

### Comparative Example 7:

A moisture-curable composition 13 was obtained using the same component, the same number of parts by mass, and the same preparation method as those of Example 1 except that 15.0 parts by mass of GENIOSIL (registered trademark) STP-E 35 available from Wacker Chemie AG (the viscosity at 25°C was 30,000 mPa·s, represented by a formula: Y-[(CH₂)₃-SiR¹ₐ(OR²)₃₋ₐ]ₓ wherein Y is a divalent organic polymer group bonded via a urethane group containing an oxyalkylene group as a polymer chain, R¹ and R² are a methyl group, a is 0, and x is 2) was used instead of the silane-modified polymer (A). The same evaluations as in Example 1 were performed.

The moisture-curable composition 13 was not cured, and therefore was determined to be unacceptable. It is considered that sufficient curing with the amine-based catalyst is not achieved since the crosslinkable silyl group is at a y position of the polymer chain.

### Comparative Example 8:

A moisture-curable composition 14 was obtained using the same components, the same number of parts by mass, and the same preparation method as those of Example 1 except that 25.0 parts by mass of GENIOSIL (registered trademark) STP-E 30 available from Wacker Chemie AG was used as the silane-modified polymer (A), the (meth)acrylate polymer (B) was not used, 19.0 parts by mass of polypropyleneglycol (diol type, molecular weight: 400) available from FUJIFILM Wako Pure Chemical Corporation was used as the plasticizer (D), and 2.0 parts by mass of GENIOSIL (registered trademark) GF 80 and 2.0 parts by mass of GENIOSIL (registered trademark) GF 69 available from Wacker Chemie AG were used as the adhesion improver (F). The same evaluations as in Example 1 were performed.

GENIOSIL (registered trademark) GF 69 is tris[3-(trimethoxysilyl)propyl] isocyanurate.

The water-resistant tensile adhesion strength of the moisture-curable composition 14 was 0.49 N/mm², did not satisfy the acceptable criterion, and was very smaller than the ordinary state tensile adhesion strength (0.73 N/mm²). Thus, the moisture-curable composition 14 was determined to be unacceptable.

These results of the evaluations show that the moisture-curable compositions containing the silane-modified polymer (A) represented by the general formula (1) described above, the silyl group-containing (meth)acrylate polymer (B), and the amine-based catalyst having at least one alkoxy group have good rubber properties and good tensile adhesion strength even after immersion in water although a metal catalyst is not used.

As described above, when the (meth)acrylate polymer having the crosslinkable silyl group in the molecule is used as the component (B), it is confirmed that the cured product obtained by curing the moisture-curable composition of the present invention has an ordinary state tensile adhesion strength of 0.75 N/mm² or more and a water-resistant tensile adhesion strength that is 1.0 or more times the ordinary state tensile adhesion strength.

**[Table 1]**

| | | | | | Example 1 | Reference Example 2 | Reference Example 3 | Reference Example 4 | Example 5 | Example 6 |
|---|---|---|---|---|---|---|---|---|---|---|
| A Silane-modified polymer | | | | | | | | | | |
| | STP-E10 | | | | | | | | | 15 |
| | STP-E30 | | | | 15 | 15 | 15 | 15 | 15 | |
| | STP-E15 | | | | | | | | | |
| | STP-E35 | | | | | | | | | |

| B (Meth)acrylate polymer | | | | | | | | | | |
|---|---|---|---|---|---|---|---|---|---|---|
| | Methyl (meth)acrylate polymer having trimethoxysilyl group in side chain and at terminal | | | | 10 | | | | 10 | 10 |
| | Ethyl (meth)acrylate polymer having trimethoxysilyl group in side chain and at terminal | | | | | 10 | | | | |
| | 2-Ethylhexyl (meth)acrylate polymer having trimethoxysilyl group in side chain and at terminal | | | | | | 10 | | | |
| | Stearyl (meth)acrylate polymer having trimethoxysilyl group in side chain and at terminal | | | | | | | 10 | | |
| | Methyl (meth)acrylate polymer having no silyl group | | | | | | | | | |
| | Butyl acrylate polymer having trimethoxysilyl group at terminal | | | | | | | | | |
| | 2-Ethylhexyl acrylate polymer having carboxyl group in side chain and at terminal | | | | | | | | | |
| | 2-Ethylhexyl acrylate polymer having hydroxyl group at terminal | | | | | | | | | |

| C Amine-based catalyst | | | | | | | | | | |
|---|---|---|---|---|---|---|---|---|---|---|
| | 3-Aminopropyl trimethoxysilane | | | | 2.5 | 2.5 | 2.5 | 2.5 | | 2.5 |
| | 3-(2-Aminomethylamino)propyltriethoxysilane | | | | | | | | 2.5 | |
| | 1,8-Diazabicyclo[5.4.0]undec-7-ene | | | | | | | | | |
| D Plasticizer | | Polypropylene glycol | | | 21 | 21 | 21 | 21 | 21 | 21 |
| E Dehydrating agent | | Vinyl trimethoxysilane | | | 2 | 2 | 2 | 2 | 2 | 2 |

| F Adhesion improver | | | | | | | | | | |
|---|---|---|---|---|---|---|---|---|---|---|
| | 3-Glycidoxypropyltrimethoxysilane | | | | 2 | 2 | 2 | 2 | 2 | 2 |
| | Tris[3-(trimethoxysilyl)propyl] isocyanurate | | | | | | | | | |
| G Hydrophobized inorganic particles | | Hydrophobic silica | | | 2.5 | 2.5 | 2.5 | 2.5 | 2.5 | 2.5 |
| H Filler | | Heavy calcium carbonate | | | 44 | 44 | 44 | 44 | 44 | 44 |
| Stabilizer | | Hindered amine | | | 1 | 1 | 1 | 1 | 1 | 1 |
| Total | | | | | 100 | 100 | 100 | 100 | 100 | 100 |
| | | | | | | | | | | |

| Evaluation item | | | Unit | Acceptable criterion | | | | | | |
|---|---|---|---|---|---|---|---|---|---|---|
| Ordinary state tensile adhesion strenath | | | N/mm² | 0.75 or more | 1.0 | 1.0 | 0.9 | 0.9 | 1.2 | 1.0 |
| Water-resistant tensile adhesion strength | | | N/mm² | 0.50 or more | 1.4 | 1.3 | 1.2 | 1.2 | 1.5 | 1.2 |
| Tensile strength | | | N/mm² | 1.5 or more | 2.5 | 2.3 | 2 | 2 | 2.5 | 2.7 |
| Elongation | | | % | 55~100 | 64 | 71 | 90 | 86 | 68 | 58 |
| Storage stability | | | | A:Good | A | A | A | A | A | A |
| Change in adhesive properties (After immersion in water/before immersion in water) | | | | 1.0 or more | 1.4 | 1.3 | 1.3 | 1.3 | 1.3 | 1.2 |

**[Table 2]**

| | | | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|---|
| A Silane-modified polymer | | | | | | | | | | | | |
| | STP-E10 | | | | | | | | | | | |
| | STP-E30 | | | | 15 | 15 | 15 | 15 | 15 | | | 25 |
| | STP-E15 | | | | | | | | | 15 | | |
| | STP-E35 | | | | | | | | | | 15 | |

| B (Meth)acrylate polymer | | | | | | | | | | | | |
|---|---|---|---|---|---|---|---|---|---|---|---|---|
| | Methyl (meth)acrylate polymer having trimethoxysilyl group in side chain and at terminal | | | | | | | | 10 | 10 | 10 | |
| | Ethyl (meth)acrylate polymer having trimethoxysilyl group in side chain and at terminal | | | | | | | | | | | |
| | 2-Ethylhexyl (meth)acrylate polymer having trimethoxysilyl group in side chain and at terminal | | | | | | | | | | | |
| | Stearyl (meth)acrylate polymer having trimethoxysilyl group in side chain and at terminal | | | | | | | | | | | |
| | Methyl (meth)acrylate polymer having no silyl aroup | | | | 10 | | | | | | | |
| | Butyl acrylate polymer having trimethoxysilyl group at terminal | | | | | 10 | | | | | | |
| | 2-Ethylhexyl acrylate polymer having carboxyl group in side chain and at terminal | | | | | | 10 | | | | | |
| | 2-Ethylhexyl acrylate polymer having hydroxyl group at terminal | | | | | | | 10 | | | | |

| C Amine-based catalyst | | | | | | | | | | | | |
|---|---|---|---|---|---|---|---|---|---|---|---|---|
| | 3-Aminopropyl trimethoxysilane | | | | 2.5 | 2.5 | 2.5 | 2.5 | | 2.5 | 2.5 | 2.5 |
| | 3-(2-Aminomethylamino)propyltriethoxysilane | | | | | | | | | | | |
| | 1,8-Diazabicyclo[5.4.0]undec-7-ene | | | | | | | | 1 | | | |
| D Plasticizer | | Polypropylene alvcol | | | 21 | 21 | 21 | 21 | 22.5 | 21 | 21 | 19 |
| E Dehydrating agent | | Vinyl trimethoxysilane | | | 2 | 2 | 2 | 2 | 2 | 2 | 2 | 2 |

| F Adhesion improver | | | | | | | | | | | | |
|---|---|---|---|---|---|---|---|---|---|---|---|---|
| | 3-Glycidoxypropyltrimethoxysilane | | | | 2 | 2 | 2 | 2 | 2 | 2 | 2 | 2 |
| | Tris[3-(trimethoxysilyl)propyl] isocyanurate | | | | | | | | | | | 2 |
| G Hydrophobized inorganic particles | | Hydrophobic silica | | | 2.5 | 2.5 | 2.5 | 2.5 | 2.5 | 2.5 | 2.5 | 2.5 |
| H Filler | | Heavy calcium carbonate | | | 44 | 44 | 44 | 44 | 44 | 44 | 44 | 44 |
| I Stabilizer | | Hindered amine | | | 1 | 1 | 1 | 1 | 1 | 1 | 1 | 1 |
| Total | | | | | 100 | 100 | 100 | 100 | 100 | 100 | 100 | 100 |
| | | | | | | | | | | | | |

| Evaluation item | | | Unit | Acceptable criterion | | | | | | | | |
|---|---|---|---|---|---|---|---|---|---|---|---|---|
| Ordinary state tensile adhesion strength | | | N/mm² | 0.75 or more | 0.7 | 0.4 | 0.4 | 0.5 | 0.3 | - | - | 0.73 |
| Water-resistant tensile adhesion strength | | | N/mm² | 0.50 or more | 0.7 | 0.5 | 0.4 | 0.5 | 0.3 | - | - | 0.49 |
| Tensile strength | | | N/mm² | 1.5 or more | 1.5 | 1.5 | 1 | 1.1 | 2.6 | - | - | 1.7 |
| Elonaation | | | % | 55~100 | 110 | 140 | 1000 | 200 | 70 | - | - | 69 |
| Storaae stability | | | | A Good | B | A | B | B | A | - | - | A |
| Change in adhesive properties (After immersion in water/before immersion in water) | | | | 1.0 or more | 0.9 | 1.3 | 1.2 | 1.1 | 1.0 | - | - | 0.7 |

## Claims

1. A moisture-curable composition comprising:
a silane-modified polymer (A) which is selected from α-silane-terminated polymers having the crosslinkable alkoxysilyl group bonded to an adjacent urethane unit via a methylene spacer
and represented by the general formula (1):
Y-[CH₂-SiR¹ₐ(OR²)₃₋ₐ]ₓ (1)
wherein Y is an x-valent polymer group bonded via said urethane unit to the group -[CH₂-SiR¹ₐ(OR²)₃₋ₐ]ₓ,
R¹ is a monovalent, optionally substituted SiC-bonded hydrocarbon group,
R²(s) may be the same as or different from each other and is a hydrogen atom or a monovalent, optionally substituted hydrocarbon group,
x is an integer of 1 to 10, and
a is 1, and
a polymer (B) containing one type alone of (meth)acrylate monomer unit and such (meth)acrylate monomer is methyl(meth)acrylate and containing a crosslinkable silyl group in the molecule; and
an amine-based catalyst (C) having at least one alkoxy group.

2. The moisture-curable composition according to claim 1 , wherein the amine-based catalyst (C) is an aminosilane.

3. The moisture-curable composition according to claim 1 or 2, comprising,
relative to 100 parts by mass of the moisture-curable composition as a whole,
5 parts by mass or more and 90 parts by mass or less of the silane-modified polymer (A),
5 parts by mass or more and 90 parts by mass or less of the (meth)acrylate polymer (B), and
0.01 parts by mass or more and 10 parts by mass or less of the amine-based catalyst (C).

4. The moisture-curable composition according to claim 1, wherein a number-average molecular weight of the silane-modified polymer (A) is 400 to 30,000, and a number of the group of -[(CH₂)-SiR¹ₐ(OR²)₃₋ₐ] is 1.5 or more and 2.2 or less per one molecule.

5. The moisture-curable composition according to claim 3, comprising,
relative to 100 parts by mass of the moisture-curable composition as a whole,
5 parts by mass or more and 90 parts by mass or less of the silane-modified polymer (A),
5 parts by mass or more and 90 parts by mass or less of the (meth)acrylate polymer (B),
0.01 parts by mass or more and 10 parts by mass or less of the amine-based catalyst (C),
0 part by mass or more and 50 parts by mass or less of a plasticizer (D),
0 part by mass or more and 10 parts by mass or less of a dehydrating agent (E),
0 part by mass or more and 5 parts by mass or less of an adhesion improver (F),
0.1 parts by mass or more and 20 parts by mass or less of hydrophobized inorganic particles (G),
0 part by mass or more and 80 parts by mass or less of a filler (H), and
0.01 parts by mass or more and 5 parts by mass or less of a stabilizer (I).

6. A method of improving water-resistant adhesive properties by bonding a substrate and a cured product obtained by curing a moisture-curable composition, which includes:
a silane-modified polymer (A) which is selected from α-silane-terminated polymers having the crosslinkable alkoxysilyl group bonded to an adjacent urethane unit via a methylene spacer
and represented by the general formula (1):
Y-[CH₂-SiR¹ₐ(OR²)₃₋ₐ]ₓ (1)
wherein Y has a polymer chain which is a polyoxyalkylene, and is a group bonded to a group of -[CH₂-SiR¹ₐ(OR²)₃₋ₐ] via said urethane unit ,
R¹ is a monovalent, optionally substituted SiC-bonded hydrocarbon group,
R²(s) may be the same as or different from each other and is a hydrogen atom or a monovalent, optionally substituted hydrocarbon group,
R' is a monovalent, optionally substituted SiC-bonded hydrocarbon group,
x is an integer of 1 to 10, and
a is 1;
a polymer (B) containing one type alone of a (meth)acrylate monomer unit and such (meth)acrylate monomer is methyl(meth)acrylate and containing a crosslinkable silyl group in the molecule; and
an amine-based catalyst (C) having at least one alkoxy group,
the method comprising
using the moisture-curable composition that includes the component (B) that is a (meth)acrylate polymer containing a crosslinkable silyl group in the molecule to make a tensile adhesion strength between the substrate and the cured product after performing a water immersion test, in which the substrate and the cured product are immersed in water at 23°C for 168 hours, 1.0 times or more of a tensile adhesion strength before performing the water immersion test.

7. An adhesive or a sealing material comprising the moisture-curable composition according to claim 1.

8. A laminated body comprising: a substrate; and a cured product obtained by curing the moisture-curable composition according to claim 1.

## Patentansprüche

1. Feuchtigkeitshärtbare Zusammensetzung umfassend:
ein silanmodifiziertes Polymer (A) ausgewählt aus α-Silan-terminierten Polymeren mit der vernetzbaren Alkoxysilylgruppe über einen Methylen-Spacer an eine benachbarte Urethaneinheit gebunden
und dargestellt durch die allgemeine Formel (1):
Y-[CH₂-SiR¹ₐ(OR²)₃₋ₐ]ₓ (1)
wobei Y eine x-wertige Polymergruppe ist, die über die Urethaneinheit an die Gruppe - [CH₂-SiR¹ₐ(OR²)₃₋ₐ]ₓ gebunden ist,
R¹ eine einwertige, gegebenenfalls substituierte SiCgebundene Kohlenwasserstoffgruppe ist,
R²(s) gleich oder verschieden voneinander sein können und ein Wasserstoffatom oder eine einwertige, gegebenenfalls substituierte Kohlenwasserstoffgruppe sind,
x eine ganze Zahl von 1 bis 10 ist und
a 1 ist, und
ein Polymer (B), das nur einen Typ von (Meth)acrylatmonomereinheit enthält und das (Meth)acrylatmonomer Methyl(meth)acrylat ist, und eine vernetzbare Silylgruppe in dem Molekül enthält; und
einen Katalysator auf Aminbasis (C) mit wenigstens einer Alkoxygruppe.

2. Feuchtigkeitshärtbare Zusammensetzung nach Anspruch 1, wobei der Katalysator auf Aminbasis (C) ein Aminosilan ist.

3. Feuchtigkeitshärtbare Zusammensetzung nach Anspruch 1 oder 2, umfassend,
bezogen auf 100 Masseteile der gesamten feuchtigkeitshärtbaren Zusammensetzung,
5 Masseteile oder mehr und 90 Masseteile oder weniger an dem silanmodifizierten Polymer (A),
5 Masseteile oder mehr und 90 Masseteile oder weniger an dem (Meth)acrylatpolymer (B) und
0,01 Masseteile oder mehr und 10 Masseteile oder weniger an dem Katalysator auf Aminbasis (C).

4. Feuchtigkeitshärtbare Zusammensetzung nach Anspruch 1, wobei ein anzahlgemitteltes Molekulargewicht des silanmodifizierten Polymers (A) 400 bis 30.000 beträgt und eine Anzahl der Gruppe -[(CH₂)-SiR¹ₐ(OR²)₃₋ₐ] 1,5 oder mehr und 2,2 oder weniger pro Molekül beträgt.

5. Feuchtigkeitshärtbare Zusammensetzung nach Anspruch 3, umfassend:
bezogen auf 100 Masseteile der gesamten feuchtigkeitshärtbaren Zusammensetzung,
5 Masseteile oder mehr und 90 Masseteile oder weniger an dem silanmodifizierten Polymer (A),
5 Masseteile oder mehr und 90 Masseteile oder weniger an dem (Meth)acrylatpolymer (B),
0,01 Masseteile oder mehr und 10 Masseteile oder weniger an dem Katalysator auf Aminbasis (C),
0 Masseteile oder mehr und 50 Masseteile oder weniger an einem Weichmacher (D),
0 Masseteile oder mehr und 10 Masseteile oder weniger an einem Dehydratisierungsmittel (E),
0 Masseteile oder mehr und 5 Masseteile oder weniger an einem Haftverbesserer (F),
0,1 Masseteile oder mehr und 20 Masseteile oder weniger an hydrophobisierten anorganischen Partikeln (G),
0 Masseteile oder mehr und 80 Masseteile oder weniger an einem Füllstoff (H) und
0,01 Masseteile oder mehr und 5 Masseteile oder weniger an einem Stabilisator (I).

6. Verfahren zum Verbessern von wasserbeständigen Hafteigenschaften durch Binden eines Substrats und eines gehärteten Produkts, erhalten durch Härten einer feuchtigkeitshärtbaren Zusammensetzung, die enthält:
ein silanmodifiziertes Polymer (A) ausgewählt aus α-Silan-terminierten Polymeren mit der vernetzbaren Alkoxysilylgruppe über einen Methylen-Spacer an eine benachbarte Urethaneinheit gebunden
und dargestellt durch die allgemeine Formel (1):
Y-[CH₂-SiR¹ₐ(OR²)₃₋ₐ]ₓ (1)
wobei Y eine Polymerkette aufweist, die ein Polyoxyalkylen ist und eine Gruppe ist, die über die Urethaneinheit an eine Gruppe -[CH₂-SiR¹ₐ(OR²)₃₋ₐ] gebunden ist,
R¹ eine einwertige, gegebenenfalls substituierte SiCgebundene Kohlenwasserstoffgruppe ist,
R²(s) gleich oder verschieden voneinander sein können und ein Wasserstoffatom oder eine einwertige, gegebenenfalls substituierte Kohlenwasserstoffgruppe sind,
R' eine einwertige, gegebenenfalls substituierte SiCgebundene Kohlenwasserstoffgruppe ist,
x eine ganze Zahl von 1 bis 10 ist und
a 1 ist;
ein Polymer (B), das nur einen Typ von (Meth)acrylatmonomereinheit enthält und das (Meth)acrylatmonomer Methyl(meth)acrylat ist und eine vernetzbare Silylgruppe in dem Molekül enthält; und
einen Katalysator auf Aminbasis (C) mit wenigstens einer Alkoxygruppe,
wobei das Verfahren umfasst
Verwenden der feuchtigkeitshärtbaren Zusammensetzung, die die Komponente (B) umfasst, die ein (Meth)acrylatpolymer ist, das eine vernetzbare Silylgruppe in dem Molekül enthält, zum Erzeugen einer Zugadhäsionsfestigkeit zwischen dem Substrat und dem gehärteten Produkt, die nach Durchführung eines Wassereintauchprüfung, bei dem das Substrat und das gehärtete Produkt 168 Stunden in Wasser bei 23 °C eingetaucht werden, 1,0-mal oder mehr der Zugadhäsionsfestigkeit vor Durchführung der Wassereintauchprüfung beträgt.

7. Klebstoff oder Dichtmaterial, umfassend die feuchtigkeitshärtbare Zusammensetzung nach Anspruch 1.

8. Laminierter Körper, umfassend: ein Substrat; und ein gehärtetes Produkt, das durch Härten der feuchtigkeitshärtbaren Zusammensetzung nach Anspruch 1 erhalten ist.

## Revendications

1. Composition durcissable à l'humidité comprenant :
un polymère modifié par un silane (A) qui est choisi parmi des polymères terminés par un α-silane ayant le groupe alcoxysilyle réticulable lié à un motif uréthane adjacent par l'intermédiaire d'un espaceur méthylène et représenté par la formule générale (1) :
Y-[CH₂-SiR¹ₐ(OR²)₃₋ₐ]ₓ (1)
dans laquelle Y est un groupe polymère x-valent lié par l'intermédiaire dudit motif uréthane au groupe -[CH₂-SiR¹ₐ(OR²)₃₋ₐ]ₓ,
R¹ est un groupe hydrocarboné monovalent, éventuellement substitué, lié par SiC,
le ou les R² peuvent être identiques ou différents les uns des autres et sont un atome d'hydrogène ou un groupe hydrocarboné monovalent, éventuellement substitué,
x est un entier de 1 à 10, et
a est 1 et
un polymère (B) contenant un type seul de motif monomérique (méth)acrylate et un tel monomère de (méth)acrylate est le (méth)acrylate de méthyle et contenant un groupe silyle réticulable dans la molécule ; et
un catalyseur à base d'amine (C) ayant au moins un groupe alcoxy.

2. Composition durcissable à l'humidité selon la revendication 1, dans laquelle le catalyseur à base d'amine (C) est un aminosilane.

3. Composition durcissable à l'humidité selon la revendication 1 ou 2, comprenant,
par rapport à 100 parties en masse de la composition durcissable à l'humidité dans son ensemble,
5 parties en masse ou plus et 90 parties en masse ou moins du polymère modifié par un silane (A),
5 parties en masse ou plus et 90 parties en masse ou moins du polymère de (méth)acrylate (B), et
0,01 partie en masse ou plus et 10 parties en masse ou moins du catalyseur à base d'amine (C).

4. Composition durcissable à l'humidité selon la revendication 1, dans laquelle un poids moléculaire moyen en nombre du polymère modifié par un silane (A) est de 400 à 30 000, et un nombre du groupe de -[(CH₂)-SiR¹ₐ(OR²)₃₋ₐ] est 1,5 ou plus et 2,2 ou moins par molécule.

5. Composition durcissable à l'humidité selon la revendication 3, comprenant,
par rapport à 100 parties en masse de la composition durcissable à l'humidité dans son ensemble,
5 parties en masse ou plus et 90 parties en masse ou moins du polymère modifié par un silane (A),
5 parties en masse ou plus et 90 parties en masse ou moins du polymère de (méth)acrylate (B),
0,01 partie en masse ou plus et 10 parties en masse ou moins du catalyseur à base d'amine (C),
0 partie en masse ou plus et 50 parties en masse ou moins d'un plastifiant (D),
0 partie en masse ou plus et 10 parties en masse ou moins d'un agent déshydratant (E),
0 partie en masse ou plus et 5 parties en masse ou moins d'un agent d'amélioration de l'adhérence (F),
0,1 partie en masse ou plus et 20 parties en masse ou moins de particules inorganiques hydrophobisées (G),
0 partie en masse ou plus et 80 parties en masse ou moins d'une charge (H), et
0,01 partie en masse ou plus et 5 parties en masse ou moins d'un stabilisant (I).

6. Procédé d'amélioration des propriétés adhésives résistantes à l'eau par liaison d'un substrat et d'un produit durci obtenu par durcissement d'une composition durcissable à l'humidité, qui comprend :
un polymère modifié par un silane (A) qui est choisi parmi des polymères terminés par un α-silane ayant le groupe alcoxysilyle réticulable lié à un motif uréthane adjacent par l'intermédiaire d'un espaceur méthylène et représenté par la formule générale (1) :
Y-[CH₂-SiR¹ₐ(OR²)₃₋ₐ]ₓ (1)
dans laquelle Y possède une chaîne de polymère qui est un polyoxyalkylène, et est un groupe lié à un groupe de -[CH₂-SiR¹ₐ(OR²)₃₋ₐ] par l'intermédiaire dudit motif uréthane,
R¹ est un groupe hydrocarboné monovalent, éventuellement substitué, lié par SiC,
le ou les R² peuvent être identiques ou différents les uns des autres et sont un atome d'hydrogène ou un groupe hydrocarboné monovalent, éventuellement substitué,
R' est un groupe hydrocarboné monovalent, éventuellement substitué, lié par SiC,
x est un entier de 1 à 10, et
a est 1,
un polymère (B) contenant un type seul de motif monomérique de (méth)acrylate et un tel monomère (méth)acrylate est un (méth)acrylate de méthyle et contenant un groupe silyle réticulable dans la molécule; et
un catalyseur à base d'amine (C) ayant au moins un groupe alcoxy,
le procédé comprenant
l'utilisation de la composition durcissable à l'humidité qui comprend le composant (B) qui est un polymère de (méth)acrylate contenant un groupe silyle réticulable dans la molécule pour réaliser une force d'adhérence en traction entre le substrat et le produit durci après avoir effectué un test d'immersion dans l'eau, dans lequel le substrat et le produit durci sont immergés dans de l'eau à 23 °C pendant 168 heures, 1,0 fois ou plus d'une force d'adhérence en traction avant d'effectuer le test d'immersion dans l'eau.

7. Adhésif ou matériau d'étanchéité comprenant la composition durcissable à l'humidité selon la revendication 1.

8. Corps stratifié comprenant : un substrat ; et un produit durci obtenu par durcissement de la composition durcissable à l'humidité selon la revendication 1.
